# EUROPEAN PATENT APPLICATION

(11) **EP 4 834 548 A2**
(43) Date of publication of application: **04.11.2026**
(21) Application number: 26170148.6
(22) Date of filing: 01.04.2026
(51) Int. Cl.: B26D 5/00, B26D 5/02, B26D 5/32, B26D 5/34, B26D 7/06, B26D 7/18, B26D 7/26

(54) **MACHINE FOR PROCESSING FOOD PRODUCTS**

(30) Priority: 10.04.2025 IT 202500007875
(71) Applicant: Grasselli S.p.A., 42020 Albinea (RE) (IT)
(72) Inventor: GRASSELLI, Giorgio, 42020 Albinea (REGGIO EMILIA) (IT)
(74) Representative: Gagliardelli, Fabrizio

(57) **Abstract**

A machine (1) for processing food products (2), comprises: a cutting station (10) including a blade having a variable position and arranged to portion the products (2) fed to the cutting station (10); a conveyor (3) for feeding the products (2) to the cutting station (10); a detection apparatus adapted to acquire product characteristic parameters relating to each product fed to the cutting station (10), and comprising at least dimensional parameters of the respective product; and
a processing unit arranged to automatically adjust at least the operation of the cutting station (10) based on operating parameters and comprising a processing module configured to automatically generate the operating parameters as a function of the product characteristic parameters.

## Description

The present invention relates to a method and a machine for processing food products, such as meat, poultry or fish, both fresh and cooked, preferably without bones or cartilage.

In detail, the invention relates to the sector of machines for portioning food products, such as industrial slicers, which are used to cut food products into slices intended, for example, for organised large-scale distribution, school or company canteens, or for catering.

The products to be portioned are fed continuously to the slicing machines from what is called the "disassembly line", in which the already slaughtered animals are divided into the products to be sliced, for example, breast, loin, thigh. The type of product to be portioned therefore depends on the slaughtered animal and on practical or cultural reasons.

A known type of slicer comprises a cutting station, a conveyor belt for conveying the product to the cutting station and, sometimes, an upper belt which has the function of pressing the product.

The cutting station comprises one or more movable blades, towards which the product is pushed by the belt, so that it is automatically cut into slices.

Upstream of the cutting station, an analysis station may be provided, for example comprising a scanner for analysing the product at the inlet. The purpose of the analysis station is to determine the size and/or shape of the product.

Taking into account the shape and dimensions of each entire product, the mutual position of the blades can be adjusted so as to obtain slices having predetermined dimensions.

The operation of the machines is chosen by the user on the basis of their needs and on the type of products to be portioned.

For example, generally, pork loin is portioned differently from chicken breast and some buyers may prefer slices of small thickness or of predetermined weight, for example not less than a certain value.

Once the portioning recipe has been chosen, the machine is set so as to divide the products which continuously arrive from the disassembly line according to that recipe, which is specific to the type of product to be portioned. That is, knowing in advance which product must be sliced and knowing how it is fed from the disassembly line to the slicing machine, the operator establishes how it must be sliced.

The recipe setting is carried out through a user interface with which the machine is equipped, by means of which the user appropriately programs the control unit, choosing the speed of the conveyor belt, the thickness or weight of the slices and other operating parameters of the machine.

The known slicing machines work very well in most situations, as they can be set to treat average products, that is, products with similar shape, dimensional and qualitative characteristics, which correspond to the most recurrent cases. However, the market has a need for more flexible slicing machines which maintain good results and efficiency in a wider range of cases.

The technical task underlying the present invention is therefore to propose a machine for processing food products which satisfies the above-mentioned need.

The technical task is achieved by the machine made in accordance with the attached claims and the described embodiments.

Further characteristics and advantages of the present invention will become more apparent from the general and thus non-limiting description of a preferred, but not exclusive, embodiment of a machine for processing food products, as illustrated in the accompanying drawings, in which:
- Figure 1 is a schematic elevation view of the machine of the invention;
- Figures 2 and 3 are details of Figure 1 where examples of movements of the blades comprised in a cutting station of the machine are seen; and
- Figures 4 and 5 are top views of the machine of the previous figures, which show the use of any diverters present therein.

With reference to the above-mentioned figures, a machine for processing food products 2 made in accordance with the invention is indicated with 1. The machine 1 has been designed to portion food products 2 of the type mentioned in the introduction and may be an industrial slicer.

The proposed machine 1 comprises a conveyor 3 on which the products 2 coming from the disassembly line are loaded.

The conveyor 3 can be an elongated conveyor device which continuously drags a succession of products 2 along the longitudinal extension direction thereof.

The conveyor 3 can comprise flexible dragging means, closed in a loop on two or more pulleys (at least one of which is a drive pulley and therefore motorised), which can consist of a belt or a series of straps side by side or still other. In practice, the products 2 travel resting freely on the upper conveying surface of the conveyor 3. In practice, the conveyor 3 may include one or more conveyor belts.

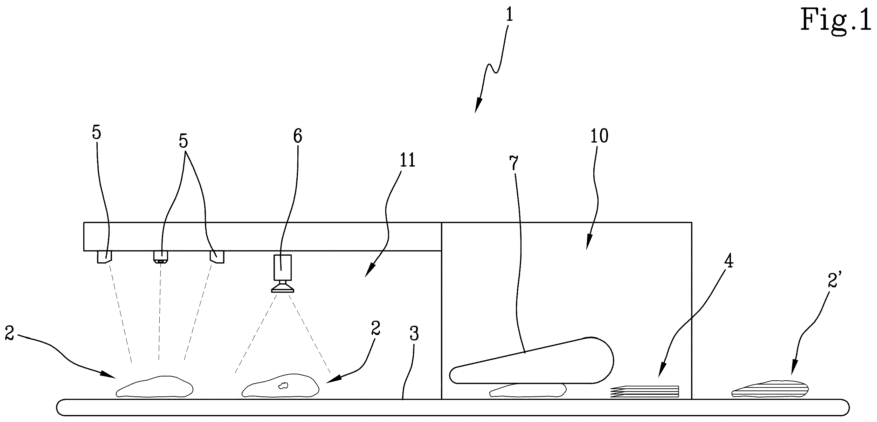

The conveyor 3 feeds the products 2 to be sliced to a cutting station 10 including at least one blade 4 having a variable position and arranged to portion the fed products 2 (see Figures 1 - 3).

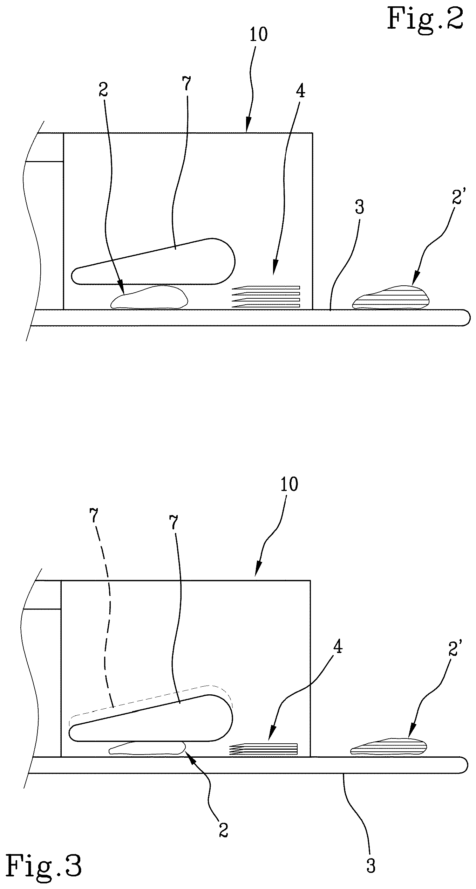

For example, the cutting station 10 can include a single blade 4 which can move at different heights relative to the upper surface of the conveyor 3 or a plurality of blades 4, which in addition to varying the distance from the conveyor 3 also have a variable mutual distance (or "cutting pitch") (see Figures 2 - 3).

The blades 4 can be placed horizontally or vertically. To be precise, the blades 4 can be provided with a cutting section, i.e., a section of their length arranged to portion the products 2, which can be arranged horizontally or vertically.

In the case of horizontal blades 4, on the basis of the distance of the blades 4 from the surface of the conveyor 3 and the mutual distance (if there are more than one), slices 2' of different thickness are obtained. In fact, on the basis of the height at which they are placed, they meet the products 2 resting on the conveyor 3 at different points of the thickness of the product. In the case of vertical blades 4, the same applies but the reference is not the surface of the conveyor 3 but a vertical plane.

In detail, the conveyor 3, which drags the products 2 resting on its upper surface, can be arranged so as to extend below the blades 4, if these are horizontal, so that the product 2 is pushed into contact to be sliced (see Figure 2).

In practice, the conveyor belt 11 defines a horizontal conveyance surface which drags the products 2 up to the cutting station 10, where the blades (or the single blade) 4 are placed so that upstream thereof, the product 2 is still whole and, downstream, the product 2 is sliced, i.e. defined by a set of slices 2'.

The blades 4 can be made of hard and elastic material, for example steel. Preferably, the blades 4 are driven in sliding along the length thereof, in unidirectional or alternating motion.

According to a possible variant, in addition to relative to the distance with the conveyor 3 or mutual distance, the position of the blades 4 is also variable in orientation, that is, in the inclination thereof relative to the conveyor 3.

In general, the machine 1 includes conveyor means for advancing the product in the cutting station 10 and, subsequently, for conveying the portions of product 2' towards the exit of the machine 1. This conveyor means can consist of one or more conveyor belts.

The invention includes at least one detection apparatus 5, 6 adapted to acquire product characteristic parameters relating to each product 2 fed to the cutting station 10.

Upstream of the cutting station 10, an analysis station 11 can be defined in which the conveyor 3 passes and in which the detection apparatus 5, 6 is placed, which can be for example a laser-type scanner 5 or an image acquisition device such as a camera 6. Other detection apparatuses employable in the invention may be weight sensors or position sensors.

In the illustrated example, there are both scanners 5 and a camera 6. For example, there can be three scanners 5, arranged at 120° relative to one another, around the advancement axis of the products 2, or two facing each other or they can be in a different number and be arranged in other manners. The representation of the scanners and the camera 5 in the accompanying drawings is schematic.

The product parameters mentioned above are at least dimensional parameters, such as height and length.

Preferably, the parameters detected for each product 2 passing in the feeding zone 11 are one or more of the following parameters: dimensional parameters, parameters relating to the shape, parameters relating to the weight, parameters relating to the type of meat, parameters relating to the arrangement of the product, such as the relative position or orientation, parameters relating to the type of cut, parameters relating to the presence of defects in the product, parameters relating to cooking of the product, for example relating to the fact that the product is raw or pre-cooked.

It should be noted that in the context of this description, 'meat' is intended as the edible part of animals, thus including fish. Therefore, the term 'type of meat' refers to commercial taxonomy such as chicken, turkey, salmon, etc. With 'type of cut', reference is made to the wings, breast, loin, etc...

In detail, dimensional parameters and shape parameters can be detected by means of the scanners 5. By means of the camera 6 or similar devices, it is possible to acquire parameters relating to the type of meat, the arrangement of the product, the type of cut, the presence of defects in the product. The weight can be measured directly with a special sensor or indirectly by calculating the volume of the product starting from the dimensional parameters and considering the average weight of the type of product, or by knowing the parameters of the type of meat and the type of cut.

Therefore, the product characteristic parameters are individual for each product 2 and potentially vary with each product 2.

The proposed machine 1 then comprises a processing unit, connected to the detection apparatus 5, 6 and comprising a processing module configured to automatically generate operating parameters as a function of the product characteristic parameters, in accordance with a set of predefined relationships.

Furthermore, the processing unit is arranged to automatically adjust at least the operation of the cutting station 10 based on the operating parameters generated by the processing module.

In more detail, the processing unit is preferably configured to vary the arrangement of the blade 4 or blades on the basis of the operating parameters, which in turn vary on the basis of the product characteristic parameters.

More generally, the processing unit is arranged to adjust the operation of the machine 1 on the basis of the operating parameters which can vary on the basis of the product characteristic parameters. In fact, in addition to the blades 4, the machine can comprise other work apparatuses 7, 8, 9 which will be discussed in the following.

Furthermore, preferably, the processing unit includes or is associated with a user interface configured so as to allow a user to select or enter processing targets relating to the desired processing mode for a product 2, with particular reference to its portioning. To be precise, the processing targets are preferably referred to a type of product, such as a specific cut in the sense indicated above.

The processing unit can then comprise a memory module for recording one or more processing targets of the food products 2.

The processing module can then be configured to generate the aforementioned operating parameters also as a function of the processing targets, as well as a function of the characteristic parameters of the individual product 2 to be portioned. In a version of the invention, it is also possible to enter or select a subset of the characteristic parameters by means of the interface, for example for the case in which the user knows that during a work session the products 2 loaded on the machine all have a certain characteristic in common.

In practice, the invention is capable of portioning each product 2 according to respective specific modes that depend on its individual characteristics, of which the product characteristic parameters are a function.

That is, the processing mode of the products 2 fed to the machine 1 of the invention, or 'recipe', can be adjusted, i.e., varied, on the basis of the individual characteristics of the product 2. To give an example, the position of the blade 4 or blades 4 can be varied to vary the weight or number of the portions.

This is exactly the opposite of what occurs with the prior art machines, which are programmed with a single recipe which is applied to all the products 2 which are processed one after the other.

Preferably, in addition to the blades (or blade) 4 of the cutting station 10, the processing unit can be configured to control the operation of other work apparatuses, as a function of the operating parameters, in accordance with the processing targets.

For example, a controllable work apparatus is the upper floating conveyor belt 7 which is often used to press the product 2 in a controlled manner while it is being portioned. In fact, in the cutting station 10, it is possible to include a belt 7 placed above the conveyor 3 which, if necessary, presses the product 2 in the path section immediately preceding the blades 4. In detail, it can be envisaged that, on the basis of the recipe, some types of product or product cut are not pressed by the floating belt 7 and others are or that they are pressed with a specific predetermined pressure (Figure 3). Below are some examples of use of the machine 1 of the invention, in order to clarify the operation thereof.

According to a first example, the processing target is to obtain 450g slices from a whole turkey breast. Therefore, in this case, the portioning target is: 450g of sliced turkey breast. The turkey breasts which come from the disassembly line and are loaded onto the conveyor 3 are both female turkey breasts and male turkey breasts. Therefore, the weight of the whole breasts to be portioned is very variable, from about 2kg to about 5kg.

Using the proposed machine 1, it is possible to define a portioning recipe which varies as a function of weight classes of the whole breast. This means that the relative position of the blade or blades changes on the basis of the weight class.

For example, the recipe can be configured as follows: if the weight is comprised between 0 g and 2000g then the machine 1 cuts three slices having a theoretical weight target of 450g for each of them, if the weight is between 2000g and 3000g then the machine 1 cuts three slices having a theoretical weight target of 460g, otherwise it cuts three slices with a theoretical target of 470g. Due to the intrinsic variability of the weight of the portions obtained from starting products 2 of different sizes, in all three cases average slices of about 450 g will be obtained.

Another application example relates to chicken breast. Chicken breast has a shape which is not constant along the longitudinal extension thereof. Therefore, when a chicken breast meets a blade 4 placed in a predetermined position, if it has a certain orientation, it will be portioned in a certain way and it will be possible to obtain slices of a given weight, if it has the opposite orientation it will be portioned differently and different slices will be obtained.

The machine 1 of the invention is capable of acquiring the orientation of each chicken breast by means of the detection device 5,6 and, as a function of the processing target, for example obtaining at least one slice weighing 100g, positioning the blade or blades 4 differently depending on the orientation.

The machine 1 can also comprise diverter devices 8, 9, for example placed upstream of the cutting station 10 or downstream thereof, arranged to individually pick up the food products 2 processed by the machine 1 and lead them towards respective outlets. The diverter devices 8, 9 are an example of work apparatus controllable by the processing unit mentioned above.

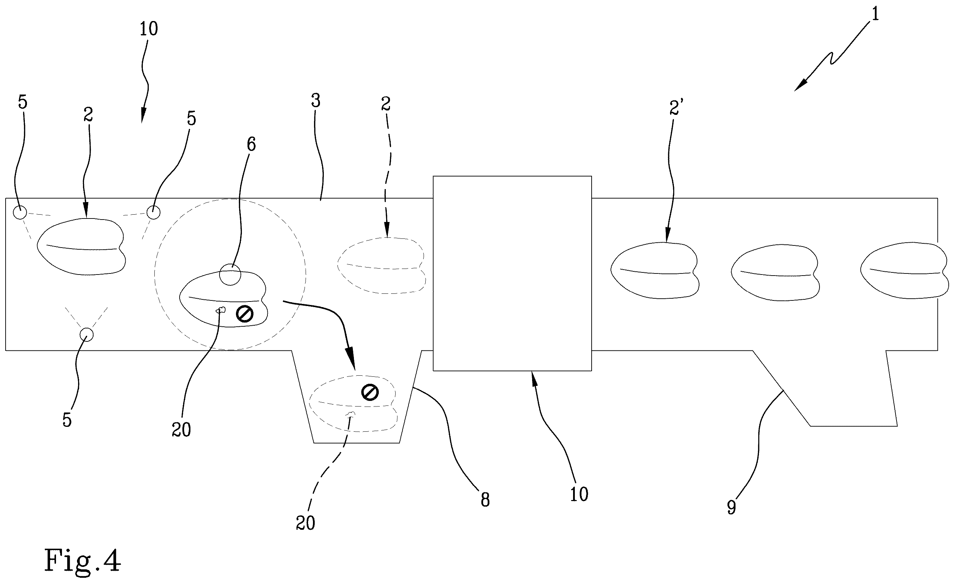

One use of the diverter devices 8, to which possible processing recipes correspond, can be to remove the products 2 with defects. In fact, as shown in Figure 4, thanks to the camera 6, or in any case to the detection devices, it is possible to check whether the food product 2 has a defect 20, such as a tumour, and to remove the product 2 from the workflow, by means of a special diverter 8.

In fact, the camera 6 can be adapted to detect at least one of the following characteristic parameters of each product 2: relative position on the conveyor 3, shape, colour.

Another use of the diverter devices 8, 9 is to discard products 2 which have been loaded on the conveyor 3 with an incorrect orientation or position, which would prevent the correct processing thereof, so as to prevent the entire product from becoming waste. In fact, recipes can be provided which establish that the individual product 2 is diverted from the workflow if the orientation or position thereof deviates from the correct ones beyond a certain threshold. For example, if the angle between a product extension axis 2 and a correct predefined direction is greater than 10°, the product 2 is diverted out of the machine, otherwise it is portioned.

Or, it is possible to direct the already portioned product, i.e., the slices thereof which exit from the cutting station 10, towards different outlets on the basis of the type of product or the type of portioning performed, so as to make a selection on the basis of the type or quality of the slices or on the basis of other criteria.

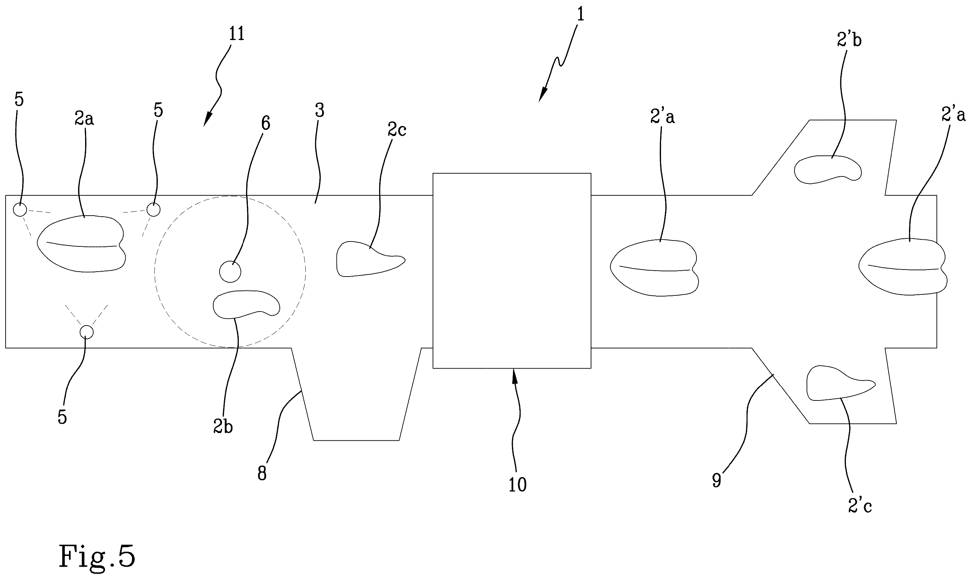

This use is shown schematically in Figure 5. If the machine receives at the inlet, for example, a chicken breast 2a, a pork loin 2b or a rib 2c, then, after cutting, the portions 2a', 2b', 2c', can be sent to different outlets, by using special diverters 9, so as not to mix the slices of different products. Thereby, during the same work session, very different products can even be portioned.

## Claims

1. A machine (1) for processing food products (2), comprising:
a cutting station (10) including at least one blade having a variable position and arranged to portion the products (2) fed to the cutting station (10);
a conveyor (3) for feeding the products (2) to the cutting station (10);
at least one detection apparatus adapted to acquire product characteristic parameters relating to each product fed to the cutting station (10), said product characteristic parameters comprising at least dimensional parameters of the respective product; and
at least one processing unit arranged to automatically adjust at least the operation of the cutting station (10) based on operating parameters and comprising a processing module configured to automatically generate the operating parameters as a function of the product characteristic parameters.

2. The machine (1) according to the preceding claim, wherein the processing unit includes or is associated with a user interface configured so as to allow a user to select or enter food product (2) processing targets and wherein the processing module is configured to generate the operating parameters also as a function of the processing targets.

3. The machine (1) according to at least one of the preceding claims, wherein the movable blades can vary mutual distances.

4. The machine (1) according to at least one of the preceding claims, wherein each blade can vary an inclination.

5. The machine (1) according to at least one of the preceding claims, wherein the processing unit is arranged to adjust the operation of the conveyor (3) on the basis of one or more respective operating parameters.

6. The machine (1) according to at least one of the preceding claims, comprising a floating belt (7) whose operation is adjustable by the processing unit on the basis of one or more respective operating parameters.

7. The machine (1) according to at least one of the preceding claims, comprising at least one diverter device (8, 9) arranged to selectively pick up products (2) from the conveyor (3), whose operation is adjustable by the processing unit on the basis of one or more respective operating parameters.

8. The machine (1) according to at least one of the preceding claims, wherein the detection apparatus includes at least one scanner (5) adapted to detect at least the following characteristic parameters of each product (2): length, height.

9. The machine (1) according to at least one of the preceding claims, wherein the detection apparatus includes at least one camera (6) adapted to detect at least one of the following characteristic parameters of each product (2): relative position on the conveyor (3), shape, colour.
